**Europäisches Patentamt**

**European Patent Office**

**Office européen des brevets**

(11) Veröffentlichungsnummer: **0 277 533**
**A1**

## (12) EUROPÄISCHE PATENTANMELDUNG

(21) Anmeldenummer: **88100614.2**

(22) Anmeldetag: **18.01.88**

(51) Int. Cl.⁴: **G21C 3/12**

(30) Priorität: **28.01.87 DE 3702506**

(43) Veröffentlichungstag der Anmeldung:
**10.08.88 Patentblatt 88/32**

(84) Benannte Vertragsstaaten:
**BE DE ES FR GB IT SE**

(71) Anmelder: **Siemens Aktiengesellschaft Berlin
und München
Wittelsbacherplatz 2
D-8000 München 2(DE)**

(72) Erfinder: **Rudolph, Matthias
Schlehenweg 36
D-8521 Weisendorf(DE)**

(54) **Kernreaktorbrennelement.**

(57) Ein Kernreaktorbrennelement mit einem Brennelementfuß (9) zum Aufsetzen auf einen Tragkörper in einem Kernreaktor hat zur Vermeidung von Schwingungen im Kernreaktor als Stützteil ein zur Längsachse des Brennelementfußes (9) paralleles Federbein (11), das sich außen am Mantel des Brennelementfußes (9) befindet und das an seinem Unterende eine Anlagefläche für den Tragkörper hat.

FIG 2

EP 0 277 533 A1

## Kernreaktorbrennelement

Die Erfindung betrifft ein Kernreaktorbrennelement nach dem Gattungsbegriff des Patentanspruchs 1.

Ein derartiges Kernreaktorbrennelement ist aus der deutschen Offenlegungschrift 2 140 170 bekannt. Bei diesem bekannten Kernreaktorbrennelement ist das federnde Stützteil ein Rahmen, der durch Paßstifte am Tragkörper im Kernreaktor geführt ist und der seinerseits Paßstifte zum Führen des Brennelementfußes aufweist. Der Brennelementfuß wird von federnden Tragstiften getragen, die durch den Rahmen in Längsrichtung beweglich geführt sind. Dieser Rahmen befindet sich somit zwischen dem Brennelementfuß und dem Tragkörper im Kernreaktor.

Es hat sich herausgestellt, daß sich an einem solchen Rahmen in Druckwasserkernreaktoren, in denen das strömende Kühlmittel besonders hohe Druckverluste an den Kernreaktorbrennelementen erleidet, Schwingungen entstehen können, die durch das strömende Kühlmittel hervorgerufen werden und zu Schäden im Kernreaktorbrennelement führen können.

Der Erfindung liegt die Aufgabe zugrunde, das bekannte Kernreaktorbrennelement so weiterzubilden, daß derartige Schwingungen vermieden werden.

Zur Lösung dieser Aufgabe hat ein Kernreaktorbrennelement der eingangs erwähnten Art erfindungsgemäß die Merkmale des kennzeichnenden Teiles des Patentanspruchs 1.

Dies ermöglicht ein Führen des Brennelementfußes direkt durch den Tragkörper im Kernreaktor, wodurch Schwingungen des Brenn elementfußes quer zur Strömungsrichtung des Kühlmittels im Kernreaktor verhindert werden können.

Die Unteransprüche sind auf Maßnahmen gerichtet, durch die solche Schwingungen noch besser verhindert werden können.

Die Erfindung und ihre Vorteile seien anhand der Zeichnung an Ausführungsbeispielen näher erläutert.

FIG 1 zeigt stark schematisiert einen Längsschnitt durch den Druckbehälter eines Druckwasserkernreaktors.

FIG 2 zeigt in Seitenansicht und zum Teil längsgeschnitten den Brennelementfuß eines erfindungsgemäßen Kernreaktorbrennelementes.

FIG 3 zeigt einen Querschnitt entsprechend der strichpunktierten Linie III-III in FIG 2.

FIG 4 zeigt die Ansicht von unten des Brennelementfußes nach FIG 2.

FIG 5 zeigt im Längsschnitt entsprechend den strichpunktierten Linien V-V in FIG 6 eine weiter Ausführungsform des Brennelementfußes eines erfindungsgemäßen Kernreaktorbrennelementes, das in einem Druckwasserkernreaktor angeordnet ist.

FIG 6 zeigt im Querschnitt entsprechend der strichpunktierten Linie VI-VI in FIG 5 die Brennelementfüße entsprechend FIG 5 zweier in dem Druckwasserkernreaktor nebeneinander angeordneter Kernreaktorbrennelemente.

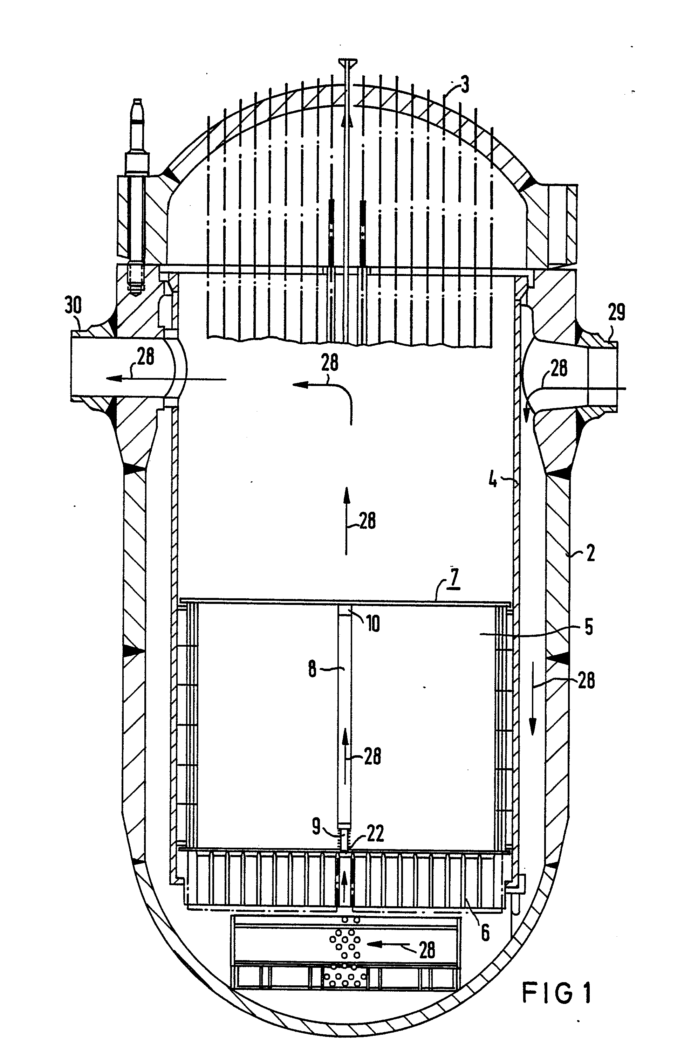

Am Deckel des Druckbehälters 2 in FIG 1 sind gestrichelt Regelstäbe 3 angedeutet. Im Unterteil des Druckbehälters 2 befindet sich ein thermischer Schild 4, der den sogenannten Reaktorkern 5 seitlich umschließt.

Im Reaktorkern 5 befindet sich eine untere Gitterplatte 6 und mit Abstand von dieser unteren Gitterplatte 6 in Richtung der Längsachse des Druckbehälters 2 eine zu diesem unteren Kerngitter 6 paralleles oberes Kerngitter 7.

Zwischen diesen beiden Kerngittern 6 und 7 sind die Kernreaktorbrennelemente so angeordnet, daß ihre Längsachsen parallel zur Längsachse des Druckbehälters 2 und rechtwinklig zu den beiden Gitterplatten 6 und 7 sind. Der deutlichen Übersicht halber ist in FIG 1 nur ein einziges Kernreaktorbrennelement 8 mit einem Brennelementfuß 9 und einem Brennelementkopf 10 dargestellt.

Das untere kerngitter 6 stellt einen Tragkörper im Druckbehälter 2 des Druckwasserkernreaktors dar, auf dem das Kernreaktorbrennelement 8 mit seinem Brennelementfuß 9 aufgesetzt ist. Das Kernreaktorbrennelement 8 wird durch das obere Kerngitter 7, in das der Brennelementkopf 10 eingepaßt ist, auf dem unteren Kerngitter 6 niedergehalten.

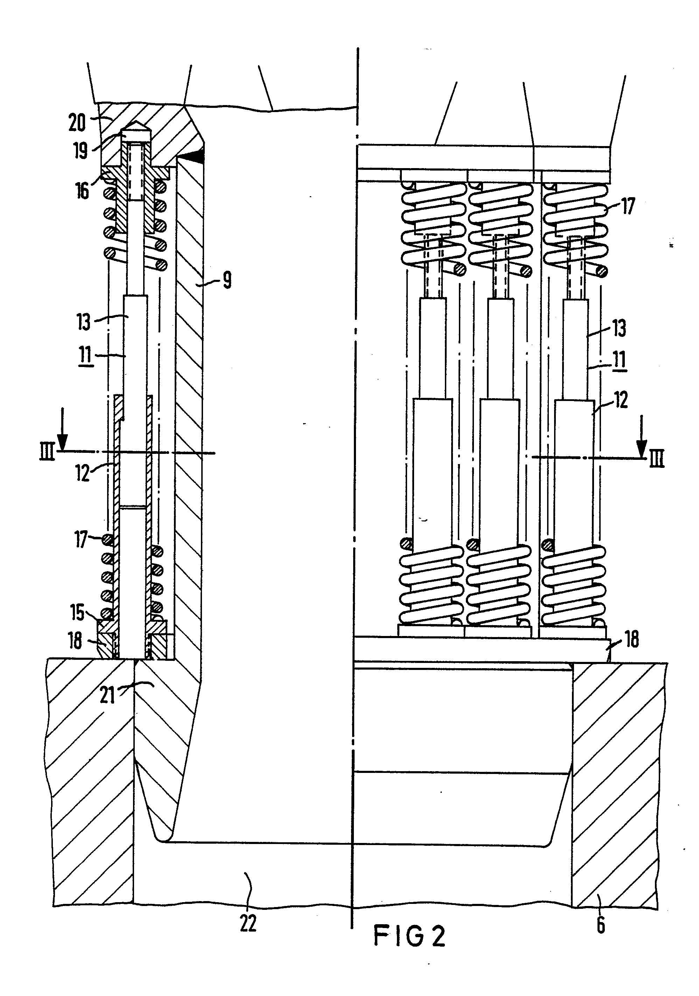

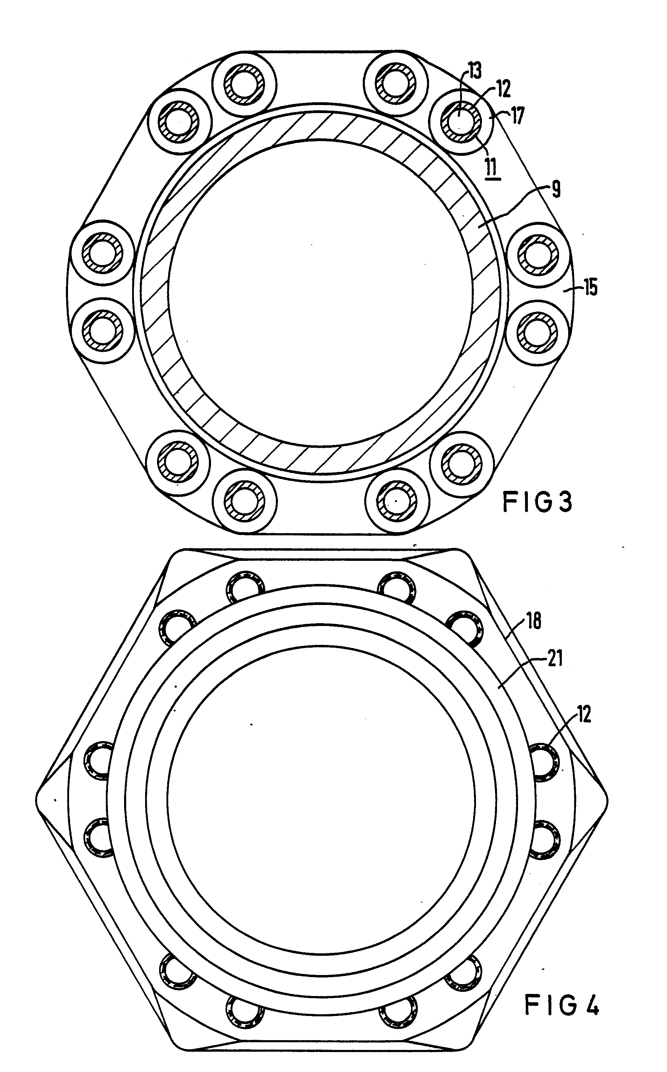

Wie FIG 2 bis FIG 4 zeigen, hat der Brennelementfuß 9 als federndes Stützteil zum Aufsetzen auf den durch das untere Kerngitter 6 gebildeten Tragkörper außen an seinem Mantel sechs Paar von Federbeinen 11, die parallel zur Längsachse des Brennelementfußes 9 und damit auch parallel zur Längsachse des Kernreaktorbrennelementes selbst und seiner Brennstäbe sind.

Jedes der Federbeine 11 hat eine Hülse 12 und einen Bolzen 13, die teleskopartig ineinander geschachtelt sind und in Längsrichtung relativ zueinander verschiebbar sind. Innerhalb der Hülse 12 befindet sich ein Anschlag für den Bolzen 13 der verhindert, daß der Bolzen 13 aus der Hülse 12 vollständig herausgezogen werden kann.

Außen am Ende der Hülse 12, die sich an dem einen Ende des Federbeines 11 befindet, ist ein Flansch 15 und außen am Ende des Bolzens 13 ein Flansch 16 angebracht. An diesen Flanschen 15 und 16 stützt sich eine zum jeweiligen Federbein 11 gehörende Schraubenfeder 17 jeweils mit einem Ende ab. Diese Schraubenfeder 17 ist also um die Hülse 12 und dem Bolzen 13 herumgewunden.

Die Unterenden der Federbeine 11 mit den Flanschen 15 sind mit einem Ring 18 verbunden. Dieser Ring 18 sitzt außen auf der Mantelfläche des Brennelementfußes 9 koaxial zu dessen Längsrichtung und ist in dieser Längsrichtung verschiebbar. Mit dem Oberende, an dem sich der Flansch 16 befindet, sind die Federbeine 11 in Axialbohrungen 19 eingesetzt, die sich in einer Schulter 20 außen an der Mantelfläche des Brennelementfußes 9 befinden. Mit Abstand in Längsrichtung von dieser Schulter 20 bildet der Brennelementfuß durch eine Schulter 21 eine Anschlagfläche für den Ring 18 und damit auch für die Unterenden der Federbeine 11, die unter Einwirkung des von der Schraubenfeder 17 auf die Flansche 15 und 16 ausgeübten Druckes zwischen den Schultern 20 und 21 festgespannt sind.

Der Ring 18 überragt die Schulter 21 in radialer Richtung nach außen. Ferner bildet der Außenmantel des Brennelementfußes 9 an der Schulter 21 ein Führungsteil am äußersten Unterende des Brennelementfußes 9, das in eine Durchführung 22 im Tragkörper im Druckbehälter 2 bildenden unteren Kerngitter 6 im Schiebesitz eingepaßt ist. Der die Schulter 21 radial nach außen überragende Teil des Ringes 18 sitzt so auf dem durch das untere Kerngitter 6 gebildeten Tragkörper auf, d.h. dieser Teil des Ringes 18 bildet eine Anlagefläche für das den Tragkörper darstellende untere Kerngitter 6, und das obere Kerngitter 7 drückt über den Brennelementkopf 10, das Kernreaktorbrennelement und die Schulter 20 am Brennelementfuß 9 den Ring 18 gegen die Wirkung der Schraubenfeder 17 auf den durch das untere Kerngitter 6 gebildeten Tragkörper. Vor dem Festspannen des Kernreaktorbrennelementes 8 im Reaktorkern 5 mit dem oberen Kerngitter 7 bildet die Schulter 21 die Anschlagfläche für den Ring 18 und damit für die Unterenden der Federbeine 11 am Brennelementfuß 9.

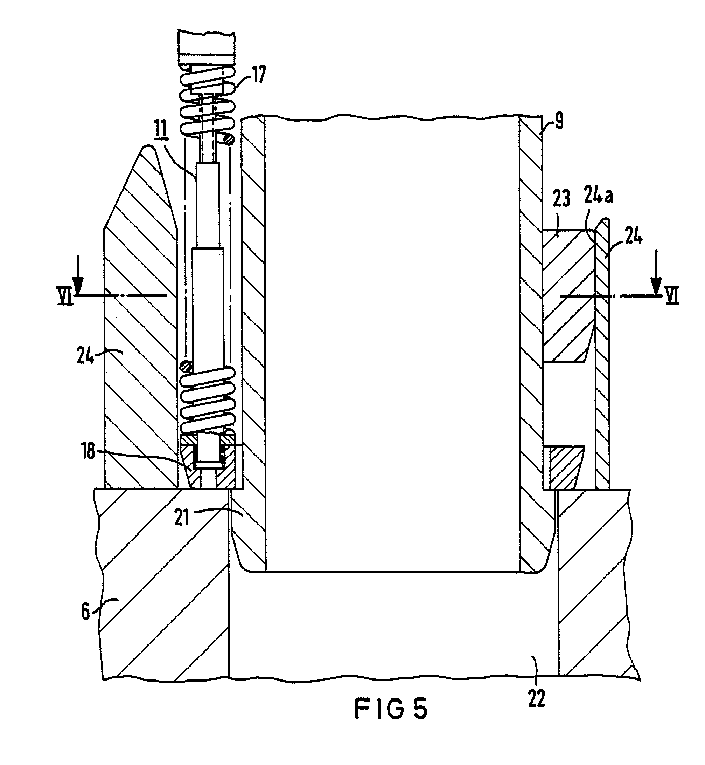

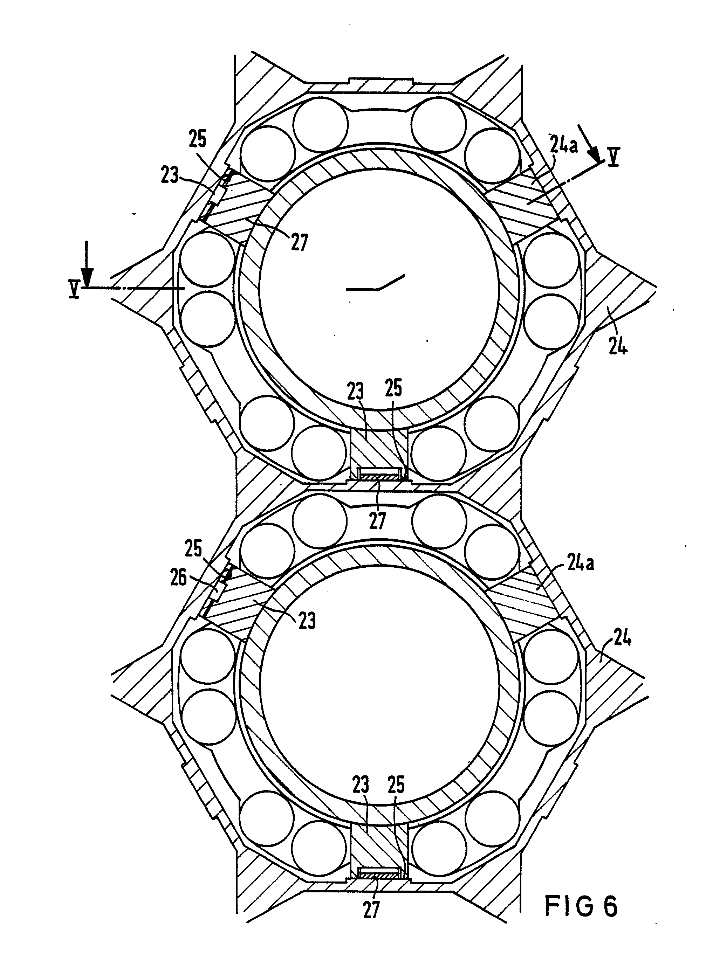

Der Brennelementfuß nach den FIG 5 und 6, in denen gleiche Teile mit den gleichen Bezugszeichen wie in den FIG 2 bis 4 versehen sind, weist Gleitschuhe 23 außen am Mantel des Brennelementfußes 9 auf, denen mit Gleitflächen 24a ausgestattete Führungskörper 24 auf der Oberseite des den Tragkörper darstellenden unteren Kerngitters 6 zugeordnet sind. Die Gleitfläche 25 eines solchen Gleitschuhs 23 kann auch mit einer Gleitrolle 26 versehen sein. Auch kann ein solcher Gleitschuh 23 an der Gleitfläche 25 mit einer Blattfeder 27 als radial wirkende Stützfeder versehen sein.

Wie die Pfeile 28 in FIG 1 zeigen, gelangt das flüssige Kühlmittel durch den Einlaßstutzen 29 in den Druckbehälter 2, wo es auf der Außenseite des thermischen Schildes 4 zum Boden .des Druckbehälters 2 strömt. Am Boden des Druckbehälters 2 steigt es durch die Durchführungen im unteren Kerngitter 6 in den Reaktorkern 5, in dem es auch durch die Kernreaktorbrennelemente 8, d.h. auf der Außenseite der Brennstäbe dieser Kernreaktorbrennelemente 8 zum oberen Kerngitter 7 hindurchströmt. Nach dem Austritt aus- dem oberen Kerngitter 7 verläßt das flüssige Kühlmittel - schließlich den Druckbehälter 2 durch einen Auslaßstutzen 30. Auch bei hohen Druckverlusten für das Kühlmittel innerhalb der Kernreaktorbrennelemente 8 sind Schwingungen dieser Kernreaktorbrennelemente 8 quer zur Strömungsrichtung vermieden.

Da die Schraubenfedern 17 der Federbeine 11 einen verhältnismäßig kleinen Federdurchmesser haben, können diese Schraubenfedern 17 mit verhältnismäßig großer Federhärte ausgeführt sein. Durch Neutronenstrahlung hervorgerufene Federrelaxationen können dann nicht soweit führen, daß die Federkraft der Schraubenfedern 17 während der Einsatzzeit der Kernreaktorbrennelemente 8 im Druckwasserkernreaktor unzulässig stark nachläßt.

## Ansprüche

1. Kernreaktorbrennelement mit mehreren, mit Kernbrennstoff gefüllten Brennstäben und mit einem Brennelementfuß, der ein federndes Stützteil zum Aufsetzen auf einen Tragkörper in einem Kernreaktor aufweist , **dadurch gekennzeichnet,** daß das federnde Stützteil ein zur Längsachse des Brennelementfußes (9) paralleles Federbein (11) ist, das sich außen am Mantel des Brennelementfußes (9) befindet und das an seinem Unterende eine Anlagefläche für den Tragkörper im Kernreaktor bildet.

2. Kernreaktorbrennelement nach Anspruch 1 , **dadurch gekennzeichnet,** daß der Brennelementfuß (9) eine Anschlagfläche für das Unterende des Federbeines (11) bildet.

3. Kernreaktorbrennelement nach Anspruch 1 , **dadurch gekennzeichnet,** daß das Unterende des Federbeines (11) mit einem Ring (18) verbunden ist, der auf dem Brennelementfuß (9) koaxial zu dessen Längsrichtung sitzt, in dieser Längsrichtung verschiebbar ist und die Anlagefläche für den Tragkörper bildet.

4. Kernreaktorbrennelement nach Anspruch 1 , **dadurch gekennzeichnet,** daß der Brennelementfuß (9) ein Führungsteil zum Einpassen am Tragkörper im Kernreaktor aufweist.

5. Kernreaktorbrennelement nach Anspruch 4, **dadurch gekennzeichnet,** daß das Führungsteil ein Gleitschuh (23) außen am Mantel des Brennelementfußes (9) ist.

6. Kernreaktorbrennelement nach Anspruch 5, **dadurch gekennzeichnet,** daß der Gleitschuh (23) an seiner Gleitfläche eine Gleitrolle (26) aufweist.

7. Kernreaktorbrennelement nach Anspruch 5, **dadurch gekennzeichnet,** daß der Gleitschuh (23) an seiner Gleitfläche eine radial wirkende Stützfeder (27) aufweist.

FIG 1

0 277 533

FIG 2

FIG 3

FIG 4

FIG 5

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 158 543 (J. SHERMAN et al.)<br>* Spalte 1, Zeilen 45-50; Spalte 2, Zeilen 12-15; Spalte 6, Zeile 72 - Spalte 7, Zeile 43; Figuren 4,6,13 *<br>--- | 1-5 | G 21 C 3/12 |
| A,D | FR-A-2 148 549 (SIEMENS AG)<br>* Seite 2, Zeile 34 - Seite 3, Zeile 7; Anspruch 1; Figur * & DE-A-2 140 170<br>--- | 1,2,4 | |
| A | DE-A-2 331 352 (COMBUSTION ENGINEERING INC.)<br>* Seite 6, letzter Absatz - Seite 7; Seite 15; Figur 4 *<br>----- | 1 | |

RECHERCHIERTE
SACHGEBIETE (Int. Cl.4)

G 21 C 3/00
G 21 C 5/00

Der vorliegende Recherchenbericht wurde für alle Patentansprüche erstellt

| Recherchenort | Abschlußdatum der Recherche | Prüfer |
|---|---|---|
| DEN HAAG | 19-04-1988 | LAMINGER N.W. |

EPO FORM 1503 03.82 (P0403)